# EUROPEAN PATENT APPLICATION

(11) **EP 4 776 127 A1**
(43) Date of publication of application: **15.07.2026**
(21) Application number: 23953746.7
(22) Date of filing: 28.09.2023
(51) Int. Cl.: G06F 9/44

(54) **METHOD AND APPARATUS FOR PROCESSING INDUSTRIAL BEHAVIOR DESCRIPTION FILE, AND COMPUTER DEVICE**

(71) Applicant: Siemens Aktiengesellschaft, 80333 München (DE)
(72) Inventor: ZHOU, Zhenhua, Suzhou, Jiangsu 215000 (CN)
(74) Representative: Isarpatent
(86) International application number: PCT/CN2023/122846
(87) International publication number: WO 2025/065602

(57) **Abstract**

The present application discloses a method for processing an industrial behavior description file, including: receiving a behavior description file based on a definition of an industrial behavior model; splitting the behavior description file into a plurality of logic types, and respectively distributing the logic types into a plurality of logic models; and executing the logic types in the plurality of logic models, to control an industrial object to operate. Through the method of the present application, the behavior description file can be converted into different logic types in the same system, and the industrial object is driven to operate by using different logic models included in the system. The method is convenient and uniform.

## Description

### TECHNICAL FIELD

The present application relates to the field of industries, and specifically, to a method and apparatus for processing an industrial behavior description file, a computer device, and a storage medium.

### BACKGROUND

A typical industrial scenario is usually very complex. The industrial scenario is usually described by using a standard operating procedure (SOP) or a bill of process (BOP). The SOP or the BOP may be converted into behaviors and workflows by using a system logic. However, the system logic is composed of a plurality of hierarchies. Each hierarchy is described by a different language, information model, or algorithm. The most commonly used logic model includes a finite state machine (FSM), a hierarchical finite state machine (HFSM), a behavior tree (Behavior Tree), and a rule engine. These models are usually executed by different controllers or software.

### SUMMARY

The summary part of the present invention is provided to introduce some selected concepts in a simplified form, and the selected concepts are further described in the following specific implementation part. The summary part is not intended to identify any key feature or necessary feature of the claimed subject, nor is it intended to be used to help determine the scope of the claimed subject.

Based on this, the present application discloses a method for processing an industrial behavior description file, including: receiving a behavior description file based on a definition of an industrial behavior model; splitting the behavior description file into a plurality of logic types, and respectively distributing the logic types into a plurality of logic models; executing the logic types in the plurality of logic models, to control an industrial object to operate.

By using the foregoing manner, a corresponding behavior or workflow in the behavior description file may be converted into a corresponding logic type, and is then distributed to control different industrial objects to be executed or operate, thereby reducing compiling costs and enhancing consistency of industrial task processing

Further, the method includes: receiving a logic description file based on the definition of the industrial behavior model.

By using the foregoing manner, the behavior description file may be further described and modified, so as to facilitate subsequent disassembling of a logic into corresponding execution logics.

Further, the splitting the behavior description file into a plurality of logic types, and respectively distributing the logic types into a plurality of logic models includes: converting a logic in the behavior description file into a normal logic, a relative logic, and a complex logic respectively; and
respectively distributing the normal logic, the relative logic, and the complex logic into a behavior tree model, a finite state machine model, and a rule engine model.

By using the foregoing manner, the behavior description file may be disassembled into different logic types which are distributed into different logic models, thereby further facilitating subsequent related distribution and execution.

Further, the method includes: receiving a state mapping standard input of a state mapping system.

By using the foregoing manner, logics in the behavior logic file may be mapped based on an industrial mapping standard, thereby facilitating subsequent execution of different industrial objects.

The present application further discloses an apparatus for processing an industrial behavior description file, including:
a description file receiving module configured to receive a behavior description file based on a definition of an industrial behavior model;
an industrial logic dispatching module configured to: split the behavior description file into a plurality of logic types, and respectively distribute the logic types into a plurality of logic models; and
an industrial logic orchestration module configured to execute the logic types in the plurality of logic models, to control an industrial object to operate. The present application further provides a computer device, including a memory and a processor. The memory has a computer program stored therein, and the processor, when executing the computer program, implements the foregoing method.

The present application further provides a computer-readable storage medium, having a computer program stored therein. The computer program, when executed by a processor, implements the foregoing method.

The present application further provides a computer program product, which is tangibly stored on a computer-readable medium and includes a computer-executable instruction. The computer-executable instruction, when executed, causes at least one processor to perform the foregoing method.

### BRIEF DESCRIPTION OF THE DRAWINGS

Implementation of the present disclosure is described by using examples and not by using limitative forms in the accompanying drawings, and similar reference numerals in the accompanying drawings represent same or similar components.
FIG. 1 is a schematic diagram of processes of a method for processing an industrial behavior description file according to an implementation of the present application.
FIG. 2 is a schematic diagram of an apparatus for processing an industrial behavior description file according to an implementation of the present application.
FIG. 3 is a schematic diagram of a computer device for processing an industrial behavior description file according to an implementation of the present application.

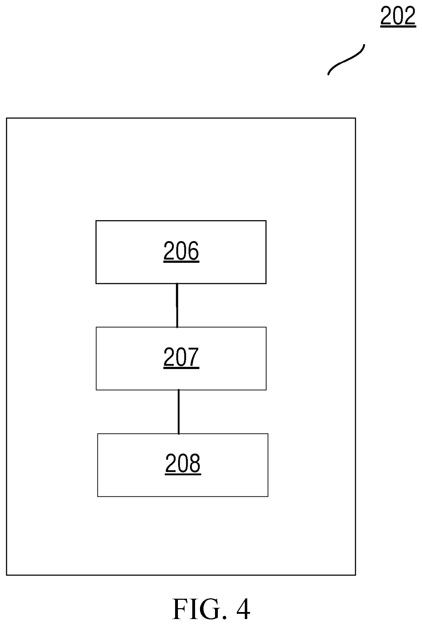

FIG. 4 is a schematic diagram of an industrial logic dispatching module according to an implementation of the present application.
FIG. 5 is a schematic diagram of an apparatus for processing an industrial behavior description file according to an implementation of the present application.
FIG. 6 is a schematic diagram of an industrial logic emitter according to an implementation of the present application.

Reference numerals are as follows:
steps S101 to S103
200: apparatus
201: module
202: module
203: module
204: module
206: module
207: module
208: module
300: computer device
302: processor
304: memory

### DETAILED DESCRIPTION

In the following specification, for the purpose of explanation, a large number of specific details are described. However, it can be understood that the present invention may be implemented without these specific details. In other examples, well-known circuits, structures, and technologies are not shown in detail, so as not to affect the understanding of the specification.

References to "an implementation", "the implementation", "an exemplary implementation", "some implementations", "various implementations", and the like throughout the specification indicate that the described implementations of the present invention may include particular features, structures, or characteristics, but do not mean that each implementation necessarily includes the particular features, structures, or characteristics. In addition, some implementations may have some or all of the features described for other implementations, or may have none of the features described for other implementations.

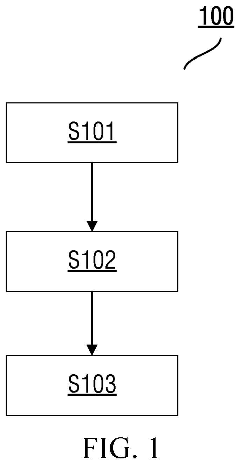

It should be understood that although all the steps in the flowchart of FIG. 1 are displayed in sequence according to the instructions of the arrows, these steps are not necessarily performed in sequence according to the sequence indicated by the arrows. Unless otherwise explicitly specified in the present application, execution of the steps is not strictly limited, and the steps may be performed in other sequences. Moreover, at least part of the steps in FIG. 1 may include a plurality of steps or a plurality of stages. These steps or stages are not necessarily executed at the same time, but can be executed at different times. The order of execution of these steps or stages is not necessarily performed sequentially, but may be performed in turn or alternately with other steps or at least a part of steps or stages of other steps.

According to current practices, many problems have not been solved: For example,

Problem A: It is very difficult to merge systems described by using an FSM, an HFSM, a behavior tree, and a rule engine. They lack a systematic method to describe the logical models in a standardized way.

Problem B: Some logic methods, such as a behavior tree, require an extensible definition to support a complex logic.

Problem C: It is difficult to understand complex logics of the FSM and the HFSM, and it is also difficult to implement the complex logics in codes. It is also very difficult to change a current state or add a new state.

Problem D: Execution engines of different logic models are greatly different and are incompatible with each other.

In the existing technology, open automation groups, such as OLE for process control (OPC) and IEC61499, still lack a good method for describing a complex logic in an industrial scenario. The IEC61499 and IEC61131-3 communities have some good methods for processing a complex logic by using an FSM system or a mutated FSM system. However, it is usually very difficult for a primary engineer to understand these systems, and they are also incompatible with other systems. A behavior tree community has different researches on descriptions of complex logics such as relative composites, but an implementation of the behavior tree community increases system complexity. Rule engines are usually not integrated with other logic models.

An implementation scenario and a focus of the present application are: creating an industrial logic emitter which is a system core component that integrates an FSM, a behavior tree, and a rule engine. The industrial logic emitter can receive a behavior description file, then convert the behavior description file into a corresponding logic, distribute the logic to different logic models, and provide different state mappings based on an industry standard, so that different software and hardware entities are finally controlled to operate and work through an orchestrator. By using the foregoing manner, an innovative method such as the industrial logic emitter that describes industrial composite logics in a unified format may be used to provide a solution to a general industrial control scenario, and may be implemented by different engineering and runtime software, so as to subsequently control an industrial object to be executed or operate, thereby reducing compiling costs and reducing complexity.

Based on this, the present application discloses a method for processing an industrial behavior description file, including:
S101: Receive a behavior description file based on a definition of an industrial behavior model.

Specifically, the behavior description file includes a file configured for representing a logic of industrial execution, or describing industrial steps. The behavior description file may be generated based on an industrial behavior model. A behavior description provided in a form of a natural language or a document is a source input of an industrial workflow, and may be described by using an industrial behavior model.

The industrial behavior model is a common information model (CIM), which focuses on an industrial interoperability behavior definition, and may work cooperatively together with an existing or future information model, such as an OLE for process control unified architecture (OPC UA), an asset administration shell (AAS), and a user association of automation technology in process industries module type package (NAMURMTP). The industrial behavior model provides a general-purpose definition for an instruction and a skill of a common industrial work step, and includes, for example, a "BOP/SOP work step", a "machine skill", a "controller instruction", and "A human action" (a manual industrial work step).

S102: Split the behavior description file into a plurality of logic types, and respectively distribute the logic types into a plurality of logic models.

Specifically, the foregoing behavior description file is split into different parts which are then distributed to different logic models.

Specifically, these behavior descriptions are inputted to a core component, that is, the industrial logic emitter. The emitter integrates logic models such as a behavior tree, an FSM, and a rule engine logic. In some embodiments, the behavior tree, the FSM, and the rule engine are respectively three different logic models, and may respectively process logic types such as tree, graph, and expression or script.

In some embodiments, the Industrial logic emitter will use logic dispatcher to fuse the behavior tree tasks & composites and FSM & HDSM driven actions. The relative composites of the behavior tree will also be replaced by FSM logics, because the FSM logics are easier for understanding and description. The complex logics will be implemented and executed by the rule engine, which can also be converted to FSM or HFSM.

In some embodiments, the data structure tree of the behavior tree and the graph of FSM can be interpreted by the same industrial logic orchestrator.

S103: Execute the logic types in the plurality of logic models, to control an industrial object to operate.

Specifically, an industrial logic orchestrator will execute and orchestrate the logics from different logic models, to control various operational technology (OT) hardware devices or resources.

Specifically, the industrial logic orchestrator is an execution engine of logics and functions. It is usually an executable binary file or container, and may be deployed into an edge device or a cloud service. All different logics in various examples will be executed in the same orchestration engine. In addition, the orchestration engine communicates with an execution target, such as software or a hardware device, and supports a selected language, that is, supports execution of different programming languages and a ubiquitous language. In conclusion, all software, hardware, and codes are orchestrated by logics.

By using the foregoing manner, an overall system architecture flow of a solution based on an industrial logic emitter is constructed. This solution can be merged with different logic models, including the FSM, the behavior tree, and the rule engine.

In some embodiments, the industrial logic emitter may include a behavior description and a logic description that are described by an industrial behavior model, a logic dispatcher for logic classification, and a mutated state for mapping to other state machine standards.

By using the foregoing manner, an innovative method such as the industrial logic emitter that describes industrial composite logics in a unified format may be used to provide a solution to a general industrial control scenario, and may be implemented by different engineering and runtime software, so as to subsequently control an industrial object to be executed or operate, thereby reducing compiling costs and reducing complexity.

Further, the method includes: receiving a logic description file based on the definition of the industrial behavior model.

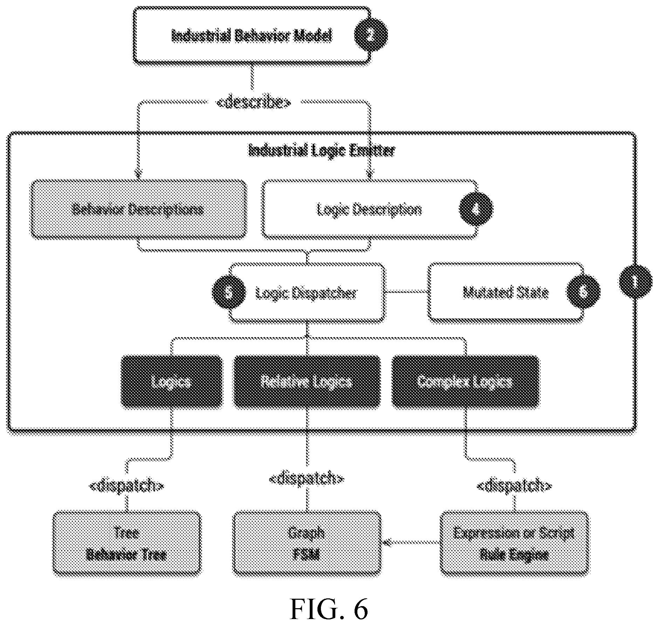

The logic description file is a markup language description of the industrial behavior model for a general logic such as a sequence, parallel, a condition, a loop, a selector, and a timer. The logic description file will become a part of an input of a logic dispatcher or an industrial logic dispatching module 202. As shown in FIG. 6, a behavior description file and a logic description file may be obtained from the industrial behavior model. Both the behavior description file and the logic description file may be inputted to the logic dispatcher for logic classification, and normal logics or short for logics, relative logics, and complex logics are obtained after classification.

By the foregoing manner, the behavior description file may be further described and decorated, to facilitate subsequent logic splitting. The behavior description file is split into the corresponding logic types and inputted to the logic models.

Further, the splitting the behavior description file into a plurality of logic types, and respectively distributing the logic types into a plurality of logic models includes:
converting a logic in the behavior description file into a normal logic, a relative logic, and a complex logic respectively; and
respectively distributing the normal logic, the relative logic, and the complex logic into a behavior tree model, a finite state machine model, and a rule engine model.

As shown in FIG. 6, the logic dispatcher is a kernel of the industrial logic emitter. The component firstly collects the behavior descriptions and logic descriptions in industrial behavior model format. In addition, an original logic is divided into three logic types: the normal logic, the relative logic, and the complex logic by using the logic as a source. The relative logic may be understood as that a state needs to be fed back and updated every tick. The complex logic may be understood as being described by an expression or a script. In conclusion, different logic types are distributed into different logic models.

As described above, the behavior tree, the FSM, and the rule engine are respectively three different logic models, and may respectively process logic types such as tree, graph, and expression or script. As shown in the figure, the normal logic corresponds to the tree. The relative logic corresponds to the graph. The complex logic corresponds to the expression or the script.

By using the foregoing manner, the behavior description file may be disassembled into different logic types which are distributed into different logic models, thereby implementing driving and execution of corresponding industrial software and hardware.

Further, the method includes: receiving a state mapping standard input of a state mapping system.

The state mapping system is configured to generate a state mapping or a mutated state. Specifically, the actual state machines of logic models follow many existing standards from multiple domains and are not compatible with each other. For example, a PackML state machine, an ISA88Batch state machine, and an IEC61499 state machine cannot be directly integrated. Therefore, a method for integrating the state machines through state mapping is required. In some embodiments, the state mapping system may alternatively be referred to as a mutated state. Therefore, the mutated state component provides the interface for state mapping to states from other standard or non-standard state machines. It may be further extended to supporting other states. As shown in FIG. 6, The mutated state component will serve as an input for the logic dispatcher to dispatch different types of logics.

By using the foregoing manner, mapping can be performed based on an industrial mapping standard, thereby facilitating subsequent execution of different industrial objects.

In conclusion, compared with a conventional logic executor, the system brings many advantages to a conventional or new system solution in a typical industrial scenario, including:
- Describe different industrial logics in a unified format instead of incompatible formats.
- Execute different logic models in the same software system instead of multiple systems.
- Be compatible with different standardized state machines.
- Better developer experiences for future engineering and runtime than current ones.

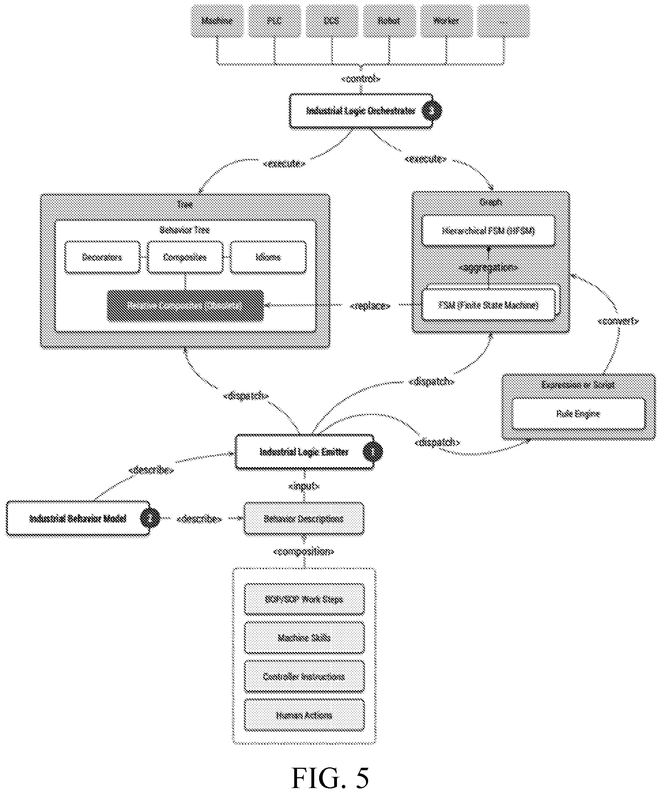

As shown in FIG. 5, an overall system architecture flow of a solution based on an industrial logic emitter is constructed. This solution can be merged with different logic models, including the FSM, the behavior tree, and the rule engine. The behavior descriptions are provided in a form of a natural language or a document, are used as a source input of an industrial workflow, and are described and defined by the industrial behavior model. As shown in FIG. 5, compositions of the behavior description file may include: a BOP/SOP work step, machine skills, a controller instruction, and a human action.

As described above, these behavior descriptions are inputted to a core component, that is, the industrial logic emitter. The emitter integrates logics such as a behavior tree, an FSM, and a rule engine. Finally, an industrial logic orchestrator will execute and orchestrate the logics from different logic models, to control various operational technology (OT) hardware devices or resources.

The industrial logic emitter is an innovative method that describes industrial composite logics in a unified format. It provides a solution to a general industrial control scenario, and may be implemented by different engineering and runtime software.

In some embodiments, the behavior tree model includes elements such as an action, a composite, conditional, and a decorator. These elements may help understanding a part of the behavior tree in FIG. 5. Some conventional concepts in the existing technology may help understand FIG. 5.

Further, the industrial logic emitter may bring benefits and values to different services:
For example 1, an IEC61131-3-based programmable logic controller (PLC), and software and a controller of a distributed control system (DCS) may use the system to describe and execute complex logics, and provide a better experience for developers based on "Logic of Choice". For example 2, software or control system based on a behavior tree may replace extensible logics in a more elegant and intuitive manner by using this method. For example 3, an IEC61499 system may use the system to describe comprehensible complex logics. For example 4, a general industrial service or control workflow may be described by using this method.

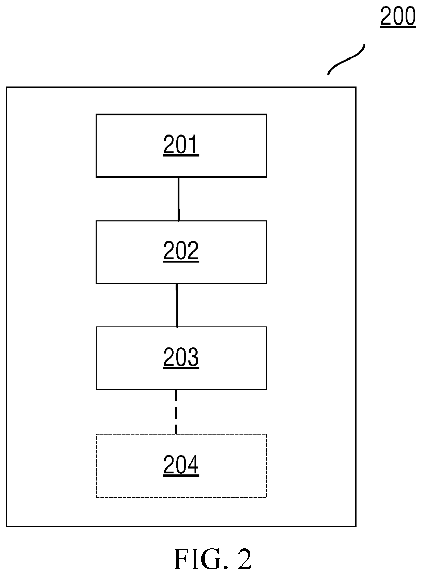

FIG. 2 provides an apparatus 200 for processing an industrial behavior description file, including:
a description file receiving module 201 configured to receive a behavior description file based on a definition of an industrial behavior model;
an industrial logic dispatching module 202 configured to: split the behavior description file into a plurality of logic types, and respectively distribute the logic types into a plurality of logic models; and
an industrial logic orchestration module 203 configured to execute the logic types in the plurality of logic models, to control an industrial object to operate.

Further, the apparatus includes: a logic description receiving module 204 configured to receive a logic description file based on the definition of the industrial behavior model.

Further, the industrial logic dispatching module 202 includes:
a logic dispatcher conversion module 206 configured to convert a logic in the behavior description file into a normal logic, a relative logic, and a complex logic; and
a logic dispatcher distribution module 207 configured to respectively distribute the normal logic, the relative logic, and the complex logic into the different logic models.

Further, the industrial logic dispatching module 202 includes:
a logic dispatcher mapping module 208 configured to receive a state mapping standard input of a state mapping system.

It should be noted that the apparatus may include more or fewer modules to implement the described functions. For example, at least one module in FIG. 2 may be further divided into a plurality of different submodules, and each submodule is configured to perform at least a part of operations described with reference to the corresponding module herein. In addition, in some examples, the apparatus 200 may further include an additional module configured to perform other operations that have been already described in this specification. In addition, a person skilled in the art may understand that the exemplary apparatus 200 may be implemented by using software, hardware, firmware, or any combination thereof.

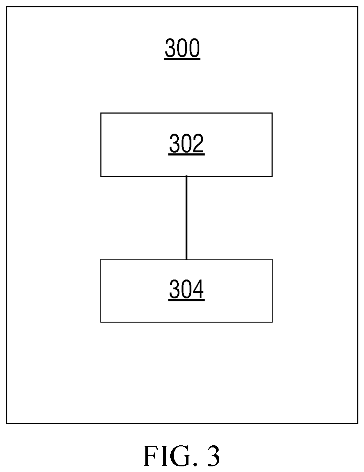

FIG. 3 provides a computer device. According to an implementation, the computer device 300 may include a processor 302. The processor 302 executes a computer program stored in a memory 304. The computer program, when executed by the processor, implements the foregoing method.

A person skilled in the art can understand that the structure shown in FIG. 3 is merely a block diagram of a partial structure related to a solution in the present application, and does not constitute a limitation on the computer device to which the solution in the present application is applied. Specifically, the computer device may include more or fewer components than those shown in the figure, or some components may be combined, or a different component layout may be used.

A person of ordinary skill in the art may understand that all or some of the procedures of the method in the foregoing implementations may be completed by a computer program instructing relevant hardware. The computer program may be stored in a non-volatile computer-readable storage medium. When the computer program is executed, the procedures of the foregoing method implementations may be implemented. Any reference to a memory, a storage, a database, or other media used in the embodiments provided in this application can include at least one of a non-volatile memory and a volatile memory. The non-volatile memory may include a read-only memory (ROM), a magnetic tape, a floppy disk, a flash memory, an optical memory, or the like. The volatile memory may include a random access memory (RAM) or an external cache. For the purpose of illustration rather than limitation, the RAM may be in various forms, such as a static random access memory (SRAM), or a dynamic random access memory (DRAM).

The present application further provides a computer-readable storage medium, having a computer program stored therein. The computer program, when executed by a processor, implements the foregoing steps.

The present application further provides a computer program product, which is tangibly stored on a computer-readable medium and includes a computer-executable instruction. The computer-executable instruction, when executed, causes at least one processor to perform the foregoing method.

Further, the computer program may be stored and run in a cloud to perform the method. Further, components of the program may be laid out on a plurality of devices or a cloud. For example, corresponding steps may be laid out and run locally or in a local computer, or run in different cloud devices, and a signal is transmitted through a communication connection, or may be laid out and run locally or in a local computer. The present application does not limit the manner or the method. A corresponding technology may be flexibly laid out and deployed. The method is executed and completed by fully using devices and technologies such as a cloud, big data, and a super-computing capability.

Some implementations of the present disclosure may include an article. The article may include a storage medium configured to store logics. Examples of the storage medium may include one or more types of computer-readable storage media that can store electronic data, including a volatile memory or a non-volatile memory, a removable or non-removable memory, an erasable or non-erasable memory, a writable or re-writable memory, and the like. Examples of the logics may include various software units, such as a software component, a program, an application, a computer program, an application program, a system program, a machine program, operating system software, middleware, firmware, a software module, a routine, a subroutine, a function, a method, a process, a software interface, an application programming interface (API), an instruction set, a computing code, a computer code, a code segment, a computer code segment, a word, a value, a symbol, or any combination thereof. In some implementations, for example, the article may store an executable computer program instruction, and the executable computer program instruction, when executed by the processor, causes the processor to perform the method and/or operations described herein. The executable computer program instruction may include a code of any suitable type, such as a source code, a compiled code, an interpreted code, an executable code, a static code, or a dynamic code. The executable computer program instruction may be implemented based on a pre-defined computer language, manner, or syntax for instructing a computer to execute a specific function. The instruction may be implemented by using any suitable high-level, low-level, objectoriented, visual, compiled, and/or interpreted programming language.

The foregoing descriptions include examples of the disclosed architecture. Certainly, it is not possible to describe every conceivable combination of components and/or methods, but a person skilled in the art may understand that many other combinations and permutations are also feasible. Therefore, the novel architecture is intended to cover all such substitutes, modifications, and variations that fall within the spirit and scope of the attached claims.

## Claims

1. A method for processing an industrial behavior description file, comprising:
receiving a behavior description file based on a definition of an industrial behavior model;
splitting the behavior description file into a plurality of logic types, and respectively distributing the logic types into a plurality of logic models; and
executing the logic types in the plurality of logic models, to control an industrial object to operate.

2. The method according to claim 1, further comprising:
receiving a logic description file based on the definition of the industrial behavior model.

3. The method according to claim 1, wherein the splitting the behavior description file into a plurality of logic types, and respectively distributing the logic types into a plurality of logic models comprises:
converting a logic in the behavior description file into a normal logic, a relative logic, and a complex logic respectively; and
respectively distributing the normal logic, the relative logic, and the complex logic into a behavior tree model, a finite state machine model, and a rule engine model.

4. The method according to claim 3, further comprising:
receiving a state mapping standard input of a state mapping system.

5. An apparatus (200) for processing an industrial behavior description file, comprising:
a description file receiving module (201) configured to receive a behavior description file based on a definition of an industrial behavior model;
an industrial logic dispatching module (202) configured to: split the behavior description file into a plurality of logic types, and respectively distribute the logic types into a plurality of logic models; and
an industrial logic orchestration module (203) configured to execute the logic types in the plurality of logic models, to control an industrial object to operate.

6. The apparatus (200) according to claim 5, further comprising:
a logic description receiving module (204) configured to receive a logic description file based on the definition of the industrial behavior model.

7. The apparatus (200) according to claim 5, wherein the industrial logic dispatching module (202) comprises:
a logic dispatcher conversion module (206) configured to convert a logic in the behavior description file into a normal logic, a relative logic, and a complex logic respectively; and
a logic dispatcher distribution module (207) configured to respectively distribute the normal logic, the relative logic, and the complex logic into the different logic models.

8. The apparatus (200) according to claim 7, wherein the industrial logic dispatching module (202) further comprises:
a logic dispatcher mapping module (208) configured to receive a state mapping standard input of a state mapping system.

9. A computer device, comprising a memory and a processor, wherein the memory has a computer program stored therein, and the processor, when executing the computer program, implements steps of the method according to any one of claims 1 to 4.

10. A computer-readable storage medium, having a computer program stored therein, wherein the computer program, when executed by a processor, performs the steps of the method according to any one of claims 1 to 4.

11. A computer program product, tangibly stored on a computer-readable medium and comprising a computer-executable instruction, wherein the computer-executable instruction, when executed, causes at least one processor to perform the method according to any one of claims 1 to 4.
